# EUROPEAN PATENT SPECIFICATION

(11) **EP 3 027 933 B1**
(45) Date of publication and mention of the grant of the patent: **13.11.2019**
(21) Application number: 14833095.4
(22) Date of filing: 29.07.2014
(51) Int. Cl.: F16H 1/26, F16H 57/12, F27B 7/22, F16C 13/06

(54) **DRIVE MECHANISM FOR A TOOTHED RING**
ANTRIEBSMECHANISMUS FÜR EINEN GEZAHNTEN RING
MÉCANISME D'ENTRAÎNEMENT POUR UNE BAGUE DENTÉE

(30) Priority: 02.08.2013 FI 20135808
(43) Date of publication of application: 08.06.2016
(73) Proprietor: Kumera Drives Oy, 11100 Riihimäki (FI)
(72) Inventor: PELTOMÄKI, Jyrki, 11100 Riihimäki (FI); SÄKKINEN, Simo, 11100 Riihimäki (FI)
(74) Representative: Papula Oy
(86) International application number: PCT/FI2014/050601
(87) International publication number: WO 2015/015057

(56) References cited:
- EP-A1- 0 319 354
- EP-A1- 0 567 777
- BE-A- 652 929
- CN-Y- 2 645 012
- US-A- 4 258 583
- US-A- 5 415 541
- US-A- 5 462 370

## Description

### FIELD OF THE INVENTION

The invention relates to the drive mechanism for a toothed ring according to the preamble of claim 1.

### BACKGROUND OF THE INVENTION

Prior art in the field of the invention has been disclosed for example in patent publications US4258583, US 6186019 and US 2012/0312113. The invention relates in particular to large toothed rings used in large rotatable drums, bascule bridge and floodgate turning mechanisms and other such massive applications. BE652929 discloses the preamble of claim 1.

In an application to be driven, a toothed ring as well as the gear that turns or rotates it must have a sufficient width in the direction of the axis of rotation so that the tooth contact becomes sufficiently long and linear and not point-like. This way, as the rotating forces transmitted from the gear to the toothed ring are distributed over a wider area, the endurance of the teeth is improved in both of them.

However, in practice the sufficient width of the teeth alone is not enough. In order to have a sufficient tooth contact on the tooth surfaces, a structure as rigid and uniformly flexible as possible has been used. However, this is not a satisfactory solution in terms of wearing of the toothing. Due to the large dimension of the drum to be rotated and the high forces required, as well as wearing, the axes of the gear and the toothed ring, i.e. at the same time also the contact surfaces of their teeth, do not remain in operation constantly parallel. Thus, the constant small changes in the direction of the axes relative to each other make the power transmission between the tooth surfaces largely point-like.

Solutions are also known where the gear is supported by bearings to the toothed ring or drum, so that the distance of the tooth surfaces remains constant. This way, the tooth surfaces are made more parallel, but problems also arise as the structure is complex and difficult to service because the drum and its rotating device are integrated to one another.

### OBJECTIVE OF THE INVENTION

The objective of the invention is to remedy the above-mentioned defects of the prior art. In particular, the objective of the invention is to disclose a novel drive mechanism for a toothed ring that is separate from the toothed ring and keeps the tooth surfaces that transmit the rotating forces to the toothed ring constantly parallel.

### SUMMARY OF THE INVENTION

The invention relates to a drive mechanism for a toothed ring which includes a power machine, a transmission and a gear fitted with a bearing to a bearing support and meshing with the toothed ring to be turned.

According to the invention, the bearing support is supported in its place to a base structure by two support arms and a third pivot point so that the virtual extensions of the support arms intersect with a line passing through the center point of the tooth contact between the toothed ring and the gear, and the third pivot point. The third pivot point is formed by a ball-and-socket joint. At least one end of the support arm includes a joint, the joint being ball-and-socket joint or a joint that turns relative to a single axis.

This way, the gear and thereby the whole drive mechanism are able to twist or turn about an axis formed by said line, always so that the tooth contact between the gear and the toothed ring remains linear and as long as possible, i.e. substantially extends over the whole width of the tooth surfaces.

The drive mechanism for a toothed ring according to the invention is designed for use in heavy and large applications in which the rotation speeds and movement speeds are low, such as large rotatable drums and bascule bridge and floodgate turning mechanisms.

Preferably in the structure according to the invention, the virtual extensions of both support arms intersect with said line at the same point. The support arms are also most suitably provided in a common plane and are equally long so that they form the sides of an isosceles trapezoid.

The third pivot point is preferably formed by a ball-and-socket joint so that it freely allows the structure to turn about the line mentioned above, guided by the two support arms. It is also possible, but not claimed, that the third pivot point is formed by a turning shaft, in which case most suitably that shaft lies in the direction of the line mentioned above.

In the structure according to the invention, the toothed ring to be moved and its drive mechanism are suitably provided in contact with each other only through the tooth contact between the toothed ring and the gear. This way, as only the tooth contact is used, other supports or suchlike structures do not interfere with and prevent the free turning of the tooth surfaces and their fitting against each other's mating surfaces. The contact of the tooth surfaces can thus be kept linear and as long as possible, i.e. optimal in terms of endurance and wearing of the structure.

It is possible that the motor, the transmission and the gear constitute an integrated assembly supported to the base structure through the support arms and the pivot point only. In another embodiment, the motor is separately supported to the base structure and connected with a drive shaft to an assembly formed by the transmission and the gear.

### ADVANTAGES PROVIDED BY THE INVENTION

The drive mechanism according to the invention has considerable advantages as compared to the prior art. The structure according to the invention keeps by itself and automatically the gear and the toothed ring as accurately as possible in parallel to each other so that the tooth contact between them remains linear and substantially extends over the whole width of the teeth. This way, the teeth are not subject to point loads that significantly weaken the endurance of the tooth surfaces.

Furthermore, because the contact and support between the toothed ring and the gear are provided only by means of said tooth contact without other direct structures or supports, the service and repair work conducted in the structure are easy to carry out. The toothed ring with accompanying structures can be easily just lifted out if the service so requires without touching the gear and its accompanying structures. Or vice versa, the gear with the transmission and motor can be disassembled if required without in any way touching those structures that they move.

### SHORT DESCRIPTION OF THE DRAWINGS

The invention will be described below in detail with reference to the accompanying drawings, in which
Fig. 1 illustrates one structure according to the invention from one angle and
Fig. 2 illustrates the structure of Fig. 1 from another angle.

### DETAILED DESCRIPTION OF THE INVENTION

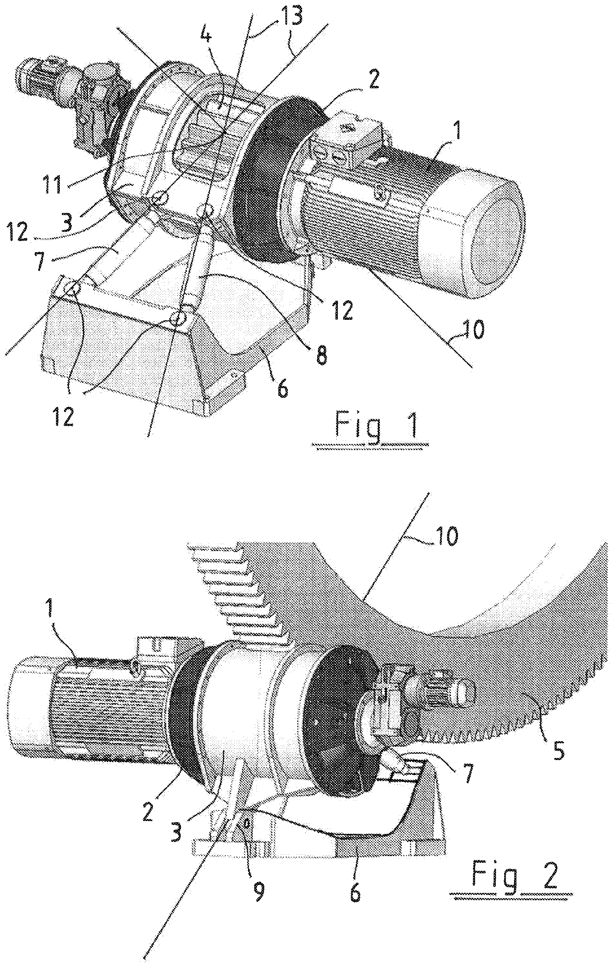

In Fig. 1 and 2, a drive mechanism for a toothed ring 5 includes a power machine 1, such as electric motor, a transmission 2 coupled thereto and a gear 4 provided after the transmission. The gear 4 is supported to a housing, i.e. a bearing support 3 carrying the whole drive mechanism. The gear 4 is during operation in contact with the toothing of a toothed ring 5 so that, as the gear 4 is rotated by the power machine 1, the toothed ring is also turned, i.e. rotated, or suitably reciprocated as required.

Depending on the application, the toothed ring 5 may be a closed circular ring or just a segment of a circular arc. As a circular ring, it may be fitted for example on the periphery of a large rotatable drum or to the nacelle of a wind turbine. As a circular arc, the toothed ring may be provided in a bascule bridge, floodgate or other such reciprocatingly movable application.

The bearing support 3 is supported with the gear 4 to a base structure 6, suitably in a flexible way. Two support arms 7 and 8 are provided between the bearing support 3 and the base structure 6 at an angle to each other so that they form the sides of an isosceles trapezoid. The support arms 7 and 8 are thus equally long. Joints 12 are provided at both ends of the support arms 7 and 8; in the embodiment of the figure, they are joints that turn relative to an axis of a specific direction, this direction being perpendicular to the plane of the trapezoid formed by the support arms. In addition to the two support arms, the bearing support 3 is supported to the base structure 6 by means of a pivot point 9. The pivot point 9 may be a ball-and-socket joint. The pivot point 9 is positioned at the center of the gear 4, i.e. on a perpendicular plane that passes through the axial center point of the gear.

The support arms 7 and 8 as well as the pivot point 9 are further so positioned that the virtual extensions 13 of the support arms intersect with a line 10 passing through the center point 11 of the tooth contact between the toothed ring 5 and the gear 4, and the third pivot point 9. Most suitably, the center point 11 of the tooth contact is provided in the direction of depth of the teeth on the pitch diameter of the gear.

It is to be noted that, although in Fig. 1 the point of intersection of the virtual extensions 13 on the line 10 is substantially provided at the same point as the center point 11 of the tooth contact, it does not necessarily have to be so. In the same way, the plane defined by the trapezoid formed by the support arms 7 and 8 is not necessarily perpendicular relative to the line 10. The essential feature is the intersection of both virtual extensions 13 on the line 10 at the same point. This way, in the structure according to the invention the gear 4 is able to turn about its center point, i.e. the line 10, on the support arms 7 and 8 as well as the pivot point 9 always to the most optimal position. This means a position as straight, i.e. parallel, as possible between the gear and the toothed ring so that the contact between their teeth substantially remains as a linear contact extending over their width.

The invention has been described above by way of example with reference to the accompanying drawings without limiting in any way the invention to the disclosed structures only. Different embodiments of the invention are possible within the scope defined by the claims.

## Claims

1. A drive mechanism for a toothed ring including a power machine (1), a transmission (2) and a gear (4) fitted with a bearing to a bearing support (3) and meshing with the toothed ring (5), **characterized in that** the bearing support (3) is supported in its place to a base structure (6) by two support arms (7, 8) and a third pivot point (9), so that the virtual extensions of the support arms intersect with a line (10) passing through the center point (11) of the tooth contact between the toothed ring (5) and the gear (4), and the third pivot point (9), that the third pivot point (9) is formed by a ball-and-socket joint, and that at least one end of the support arms (7, 8) includes a joint (12), the joint (12) being a ball-and-socket joint or a joint that turns relative to a single axis.

2. The drive mechanism according to claim 1, **characterized in that** the virtual extensions of both support arms (7, 8) intersect with said line (10) at the same point.

3. The drive mechanism according to claim 1, **characterized in that** the toothed ring (5) to be moved and its drive mechanism contact each other only through the tooth contact between the toothed ring (5) and the gear (4).

4. The drive mechanism according to any one of claims 1-3, **characterized in that** the support arms (7,8) lie on the same plane and form the sides of an isosceles trapezoid.

5. The drive mechanism according to any one of claims 1-4, **characterized in that** the power machine (1), the transmission (2) and the gear (4) form an integrated assembly supported to the base structure (6) by means of the support arms and the pivot point only.

6. The drive mechanism according to any one of claims 1-5, **characterized in that** the power machine is separately supported to the base structure and connected to the transmission by a drive shaft.

## Patentansprüche

1. Antriebsmechanismus für einen Zahnkranz, umfassend eine elektrische Maschine (1), ein Getriebe (2) und ein Zahnrad (4), das mit einem Lager an einem Lagerträger (3) montiert ist und mit dem Zahnkranz (5) in Eingriff ist, **dadurch gekennzeichnet, dass** der Lagerträger (3) an seinem Platz an einer Basisstruktur (6) durch zwei Tragarme (7, 8) und einen dritten Drehpunkt (9) abgestützt ist, so dass sich die virtuellen Verlängerungen der Tragarme mit einer Linie (10) schneiden, die durch den Mittelpunkt (11) des Zahnkontakts zwischen dem Zahnkranz (5) und dem Zahnrad (4) und dem dritten Drehpunkt (9) hindurch läuft, dass der dritte Drehpunkt (9) durch ein Kugelgelenk gebildet ist und dass mindestens ein Ende der Tragarme (7, 8) ein Gelenk (12) aufweist, wobei das Gelenk (12) ein Kugelgelenk oder ein Gelenk ist, das relativ zu einer einzelnen Achse drehbar ist.

2. Antriebsmechanismus nach Anspruch 1, **dadurch gekennzeichnet, dass** sich die virtuellen Verlängerungen beider Tragarme (7, 8) mit der Linie (10) am gleichen Punkt schneiden.

3. Antriebsmechanismus nach Anspruch 1, **dadurch gekennzeichnet, dass** der zu bewegende Zahnkranz (5) und sein Antriebsmechanismus sich nur durch den Zahnkontakt zwischen dem Zahnkranz (5) und dem Zahnrad (4) berühren.

4. Antriebsmechanismus nach einem der Ansprüche 1-3, **dadurch gekennzeichnet, dass** die Tragarme (7,8) in der gleichen Ebene liegen und die Seiten eines gleichschenkligen Trapezes bilden.

5. Antriebsmechanismus nach einem der Ansprüche 1-4, **dadurch gekennzeichnet, dass** die elektrische Maschine (1), das Getriebe (2) und das Zahnrad (4) eine integrierte Baugruppe bilden, die nur über die Tragarme und den Drehpunkt auf der Basisstruktur (6) abgestützt ist.

6. Antriebsmechanismus nach einem der Ansprüche 1-5, **dadurch gekennzeichnet, dass** die elektrische Maschine separat an der Basisstruktur abgestützt und über eine Antriebswelle mit dem Getriebe verbunden ist.

## Revendications

1. Mécanisme d'entraînement pour une bague dentée incluant une machine à force motrice (1), une transmission (2) et un engrenage (4) adapté à un palier sur un support de palier (3) et s'engrenant avec la bague dentée (5), **caractérisé en ce que** le support de palier (3) est supporté dans son emplacement sur une structure de base (6) par deux bras de support (7, 8) et un troisième point de pivotement (9) de sorte que les extensions virtuelles des bras de support croisent une ligne (10) passant à travers le point central (11) du contact denté entre la bague dentée (5) et l'engrenage (4), et le troisième point de pivotement (9), que le troisième point de pivotement (9) est formé par un joint à rotule, et qu'au moins une extrémité des bras de support (7, 8) inclut un joint (12), le joint (12) étant un joint à rotule ou un joint qui tourne par rapport à un seul axe.

2. Mécanisme d'entraînement selon la revendication 1, **caractérisé en ce que** les extensions virtuelles des deux bras de support (7, 8) croisent ladite ligne (10) au niveau du même point.

3. Mécanisme d'entraînement selon la revendication 1, **caractérisé en ce que** la bague dentée (5) à déplacer et son mécanisme d'entraînement entrent en contact l'un avec l'autre seulement à travers le contact denté entre la bague dentée (5) et l'engrenage (4).

4. Mécanisme d'entraînement selon l'une quelconque des revendications 1 à 3, **caractérisé en ce que** les bras de support (7, 8) se trouvent sur le même plan et forment les côtés d'un trapèze isocèle.

5. Mécanisme d'entraînement selon l'une quelconque des revendications 1 à 4, **caractérisé en ce que** la machine à force motrice (1), la transmission (2) et l'engrenage (4) forment un ensemble intégré supporté sur la structure de base (6) au moyen des bras de support et du point de pivotement seulement.

6. Mécanisme d'entraînement selon l'une quelconque des revendications 1 à 5, **caractérisé en ce que** la machine à force motrice est supportée séparément sur la structure de base et raccordée à la transmission par un arbre d'entraînement.
